# EUROPEAN PATENT APPLICATION

(11) **EP 3 937 009 A1**
(43) Date of publication of application: **12.01.2022**
(21) Application number: 20185002.1
(22) Date of filing: 09.07.2020
(51) Int. Cl.: G06F 9/30

(54) **A COMPUTING UNIT, METHOD TO PERFORM COMPUTATIONS, METHOD TO GENERATE PROGRAM CODE FOR A HARDWARE COMPRISING A MULTI-STAGE-BUFFER AND PROGRAM CODE**

(71) Applicant: Fraunhofer-Gesellschaft zur Förderung der angewandten Forschung e.V., 80686 München (DE)
(72) Inventor: SCHUHMANN, Norbert, 90158 Erlangen (DE); KRÜGER, Jens, 67663 Kaiserslautern (DE); FÜTTERLING, Valentin, 67663 Kaiserslautern (DE); BEDNARA, Marcus, 90158 Erlangen (DE)
(74) Representative: 2SPL Patentanwälte PartG mbB

(57) **Abstract**

A computing unit (100), comprises first circuitry (110) configured to determine at least one memory address based on a first program code and to receive data stored at the memory address. A second circuitry (120) is configured to perform arithmetic operations based on a second program code using the received data.

## Description

### Field

Examples relate to computing units, methods to perform computations efficiently, and to methods to generate program code for a hardware comprising a multi-stage-buffer.

### Background

General-purpose CPUs often consume a lot more energy than necessary to perform a task since they are required to support a lot of instructions (legacy instructions). Hardware accelerators or hardware accelerated computation units exist for multiple applications, which are highly specialized for the application (e.g. deep learning) and, consequently, not usable for any other task. Hardware accelerators supporting more applications, as for example Graphic Processing Units (GPU) may support a more generalized instruction set and, therefore, consume more energy. In particular, the computation of memory addresses used to access data within a memory may be costly in terms of energy and computation time if such generalized architectures are used, although there exists a whole class of applications with similar memory access schemes.

There exists a demand for computing units that perform computations efficiently while not being restricted to a single application.

### Summary

Embodiments relate to a computing unit comprising first circuitry configured to determine at least one memory address based on a first program code and to receive data stored at the memory address. Further, the computing unit comprises second circuitry configured to perform arithmetic operations based on a second program code using the received data. The embodiments separate the hardware and the program code for memory access from the hardware and the program code for performing calculations using data received from the memory. Doing this may allow for highly effective hardware implementations of memory access circuitry resulting in fast memory address calculations at moderate energy consumption.

An Embodiment relates to a method to perform computations, the method comprising determine at least one memory address based on a first program code. The method further comprises receiving data stored at the memory address and performing a calculation based on a second program code using the received data. Separating the program code for memory access from the program code for performing calculations may result in the capability to use code for highly efficient memory access resulting in an overall short execution time of the computations.

Further Embodiments relate to a method to generate program code for a hardware comprising a multi-stage-buffer having a queue of n elements. The method comprises defining n separate registers for every element of the multi-stage-buffer and optimizing the program code to generate optimized program code. The method further comprises replacing instructions to access one of the n separate registers with an instruction to access the multi-stage-buffer within the optimized program code. Treating every element of the queue as a separate register during optimization of a compiler may automatically result in the correct order of instructions so that the multi-stage-buffer is filled and read out in the correct order to maintain consistency of the data serially propagating through the queue of n elements.

### Brief description of the Figures

Some examples of apparatuses and/or methods will be described in the following by way of example only, and with reference to the accompanying figures, in which
Fig. 1 schematically illustrates an embodiment of a computing unit;
Fig. 2 schematically illustrates a further embodiment of a computing unit;
Fig. 3 illustrates an application having a memory access pattern efficiently usable with an embodiment of a computing unit.
Fig. 4 illustrates a flow chart of a method to perform computations,
Fig. 5 illustrates a flow chart of a method to generate program code for a hardware comprising a multi-stage-buffer ; and
Fig. 6 illustrates a First In First Out register.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

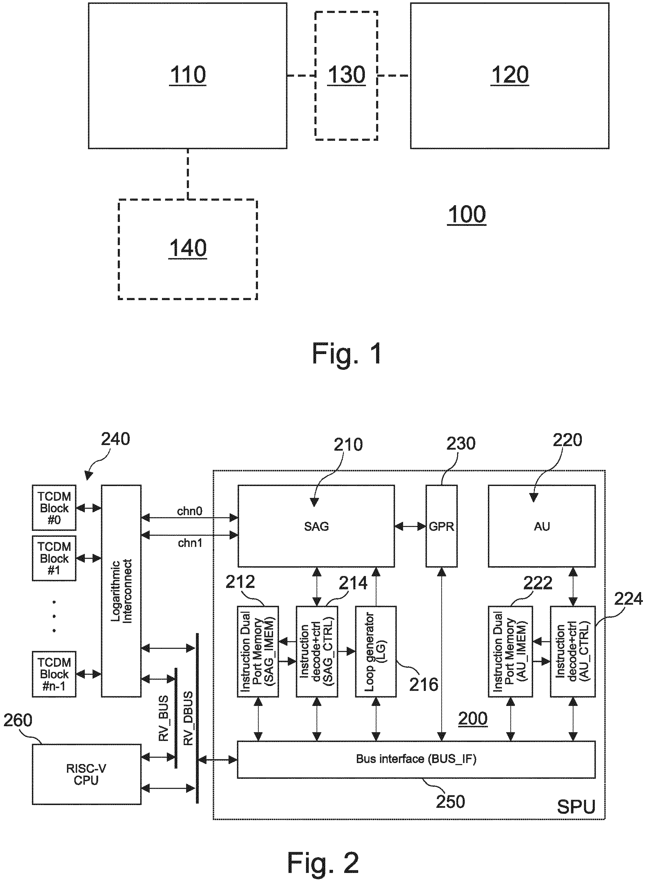

Fig. 1 schematically illustrates an embodiment of a computing unit 100. The computing unit 100 comprises first circuitry 110 configured to determine at least one memory address based on a first program code and to receive data stored at the memory address. The computing unit 100 further comprises second circuitry 120 configured to perform arithmetic operations based on a second program code using the received data. Separating the hardware and the program code for memory access from the hardware and the program code for performing calculations using data received from the memory may allow for highly effective hardware implementations of memory access circuitry resulting in fast memory address calculations at moderate energy consumption. To the contrary, conventional CPUs and GPUs use address calculation units, which set the necessary addresses for the accesses within the software and then calculate the expressions using the hardware. This generates overhead and takes several clock cycles, so that a lot of energy is consumed, and data is often not available on time, especially with complicated volumes and memory access schemes.

In some embodiments, the computing unit optionally further comprises interface circuitry 130 configured to receive data from the first circuitry 110 and to provide data to the second circuitry 120. By means of the interface circuitry, independent hardware circuits running independent program code may be capable of exchanging data.

In some embodiments the interface circuitry comprises a multi-stage-buffer, such as for example a First In First Out Register (FIFO). Exchanging data via a multi-stage-buffer may automatically compensate minor asynchronous operation of the two circuits 110 and 120, which may occur since both circuits operate on separate program codes and conventional synchronization achieved using a single program code does not apply. For the same purpose, some embodiments may comprise a directed multi-stage-buffer with a queue of n elements. A directed multi-stage-buffer with a queue of n elements is a hardware component configured to store and forward data in a predetermined direction. While data is written into one end of the queue, it is read from the other end of the queue after it has been serially shifted through every element of the queue. Examples for directed multi-stage-buffers are FIFOs and queues of serially concatenated latches.

In some embodiments, the first circuitry 110 comprises a first program memory configured to hold the first program code and the second circuitry 120 comprises a second program memory configured to hold the second program code. Having separate memories within the first circuitry 110 and second circuitry 120 may allow to operate them fully independent from one another and, for example, implement the first circuitry 110 for memory access easily into existing other hardware designs.

According to some embodiments, the first circuitry 110 comprises at least one loop counter. Having hardware loop counters and using those to determine memory addresses may serve to quickly and efficiently determine the memory addresses used for a whole class of applications. For example, if the data to be processed is serially stored in memory at a constant spacing (stride), the output of the loop counter may be multiplied with the stride to directly determine the next memory address to be accessed without any further time-consuming computations. As opposed to conventional approaches, the memory address may so be determined within a single computing cycle of the circuit, while using conventional approaches to calculate the memory addresses may result in the use of several computations cycles to be able to determine a single memory address.

In some embodiments, the first circuitry 110 is configured to receive an offset value and to determine a memory address combining the offset value and an output of the loop counter. An offset value may be used to define a start address for the data in the memory so that memory address generation can start at said start address. In further embodiments, the first circuitry 110 may be capable to simultaneously generate multiple memory addresses in a single computational cycle. To this end, further embodiments may be capable to receive multiple offset values and to process every offset value individually.

In some embodiments, the first circuitry comprises hardware configured to multiply an output of the loop counter with a stride, which may enable to automatically iterate through serially stored data within the memory and the generation of a new memory address at every computations cycle. Further embodiments may comprise multiple loop counters to support simultaneous generation of multiple memory addresses.

In some embodiments, the first circuitry 110 is configured to process very long instruction words to allow to support the simultaneous generation of multiple memory addresses.

In some embodiments, the second circuitry 120 is configured to process very long instruction words to allow to cause multiple arithmetic operations with a single instruction, e.g. to the simultaneously process data read from multiple memory addresses.

Fig. 2 schematically illustrates a further embodiment of a computing unit 200 using the principles illustrated in figure 1.

The computing unit 200 comprises first circuitry 210 configured to determine at least one memory address based on a first program code and to receive data stored at the memory address. The computing unit 200 further comprises second circuitry 220 configured to perform arithmetic operations based on a second program code using the received data. Interface circuitry 230 comprising a multi-stage-buffer is configured to receive data from the first circuitry 210 and to provide data to the second circuitry 220.

The first circuitry 210 comprises a first program memory 212 configured to hold the first program code and the second circuitry 220 comprises a second program memory 222 configured to hold the second program code. Instruction decoders 214 and 224 serve to decode the program code and to make the circuits 210 and 220 perform the operations of the code. The first circuitry 210 further comprises at least one loop counter 216.

A data bus 250 serves to enable the first circuit 210, the second circuit 220, and the interface circuitry 230 to communicate with one another. Figure 2 also illustrates some external components to the computing unit 200. For example, a memory system 240 is illustrated, which is accessed from the first circuitry 210. A general-purpose CPU 260 is also illustrated which is capable to communicate with the computing unit 202, for example, to control its operation or to make its output usable by a program running on the general-purpose CPU 260. Depending on the implementation, the general-purpose CPU 260 may reside on a separate chip or die or the computing unit 200 may be integrated with the general-purpose CPU 260 in a common chip or on a common dye.

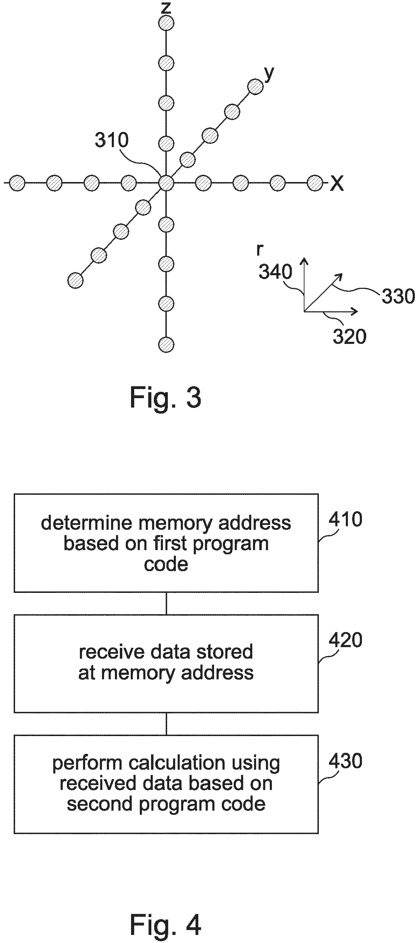

Fig. 3 graphically illustrates an application having a memory access pattern efficiently usable with an embodiment of a computing unit. Fig. 3 graphically illustrates multiple discrete points within a three-dimensional volume that are centered around a central point 310. In the chosen notation, the points are identified within an orthogonal coordinate system having a x-axis 320, a y-axis 330, and a z-axis 340. For example, in simulations, the simulated properties of the center point 310 are often computed using local dependencies and, hence, the properties of the neighboring points on the grid. Figure 3 is an illustration of such a scenario, where it is assumed that the properties of the center point 310 depend on the illustrated neighbors along the axes x, y, and z. Depending on how the properties of each point within the discretized volume are stored in an associated memory, the memory addresses can efficiently be computed by an embodiment of a first circuit 210. If, for example, the values for the points in the x-direction are sequentially stored, the output of a loop counter can be multiplied with the size of memory one single point requires to determine the memory address to be read out for the next point in the x-direction. Similarly, memory addresses for the values of the points in the y and z direction can be calculated using hardware loop counters if it is known how they are stored in memory and what the size of every dimension is. Likewise, the output of the loop counters may be used to iterate through the points within the entire volume to be processed and an offset value can be used to define one point in the vicinity of the point. Multiple offset values then serve to describe the shape of the stencil illustrated in fig. 3.

The memory access pattern described with respect to the application of a stencil illustrated in fig. 3 is just one example of an application that highly benefits from an embodiment as described herein. Further applications that may likewise benefit are, for example, matrix multiplications and the application of convolution filters.

Fig. 4 illustrates the principle of operations underlying the previously described hardware embodiments again by means of a flow chart of a method to perform computations, for example within the previously described hardware.

As illustrated above, the embodiments separate memory address generation and computations on the data received from the memory addresses in two separate program codes.

The method comprises determining at least one memory address based on a first program code 410 and receiving data stored at the memory address 420.

Further, the method comprises performing a calculation 430 based on a second program code using the received data.

As previously discussed, some embodiments of computing units comprise a multi-stage-buffer to interface between the first circuitry and the second circuitry. A multi-stage-buffer comprises multiple serially connected registers (queue elements) and every new entry into the multi-stage-buffer is written into the first element of the queue while a read from the multi-stage-buffer receives data from the last element of the queue. Having two independently running circuits exchanging data via the multi-stage-buffer, the order in which the first circuitry writes data into the multi-stage-buffer FIFO and the order in which the second circuitry reads data from the multi-stage-buffer is vital to not obscure data.

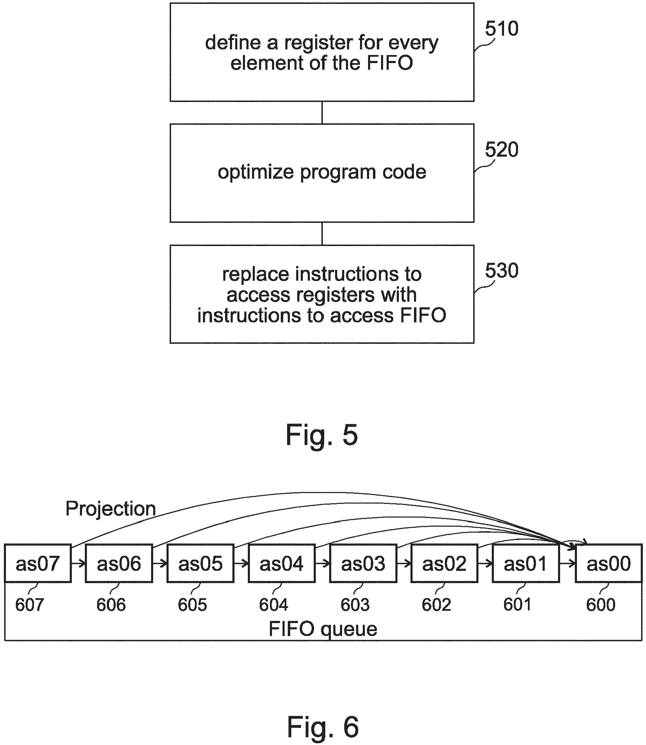

Fig. 5 illustrates a flow chart of a method 500 to generate program code for a hardware comprising a multi-stage-buffer and Fig. 6 graphically illustrates the association of registers within the method. While figure 6 illustrates a FIFO having a queue of depth 8, the following considerations assume a more general structure having a queue of arbitrary length n.

The method 500 comprises defining n separate registers for every element of the multi-stage-buffer 510 and optimizing the program code 520 to generate optimized program code.

Further, the method comprises replacing instructions to access the n separate registers with an instruction to access the multi-stage-buffer within the optimized program code 530.

In summary, during the optimizations of the code performed by a compiler or by a similar means, the compiler treats every element of the multi-stage-buffer queue as an independent register. This automatically generates an optimized code in which the order of write and read operations to and from the multi-stage-buffer is correct to preserve data consistency if access to the virtual registers associated to a multi-stage-buffer are subsequently re-mapped to accesses to the multi-stage-buffer itself within the optimized program code.

For the sake of completeness, fig. 6 graphically illustrates the remapping of virtual registers 600 to 607 of a single FIFO having a queue of length eight after the generation of the optimized program code. As shown in figure 6, the instructions within the optimized program code, which access every register associated to the FIFO are replaced by instructions accessing the single FIFO, which may, for example, be represented by the same hardware address used for the first virtual register used to define the FIFO before the optimization.

Some of the previously described embodiments are based on a hardware/software co-design to use only instructions for the hardware that are required while being well enough generalized and quite easy to program. A corresponding architecture may then not be optimized for a particular application, but for an application class. Such an application class can, for example, be stencil codes. Stencils are memory access patterns that arise when finite differences techniques are used in simulation applications, for example. In general, it is about calculations on discrete volumes (with many individual points) where it is iterated over a volume over a variety of time steps. What the values or elements associated with the points represent is principally irrelevant. Some examples of the properties associated to a point are temperatures, liquids, and sound amplitudes. An aspect is that the calculations for the next time step have only dependencies with immediate neighboring points and are therefore local, which makes the application benefit from the embodiments described herein.

Amongst others, the embodiments address the following problems. Address generation for multidimensional access schemes conventionally generates a long overhead and thus requires energy. Conventional specialized architectures are no longer generic enough to process all sorts of compute kernels - often one cannot afford to build a hardware that supports just one application. Conventional direct coupling of load/store units and arithmetic units can lead to stalls and thus affect efficiency. It is to be assured that all required points are always available to the computing units.

In summary, embodiments described herein comprise a new concept of circuitry for accessing memory, so that per point in volume not only one operation, but a program with arbitrary memory accesses can be executed. To preserve the scalability of the calculation units, these calculation units for memory access and for computations are tolerant of resulting delays (latency) when accessing data in the shared scratchpad memory. The units within the computing unit that perform the actual calculations (Arithmetic Unit (AU) or second circuitry) have been separated from the unit that calculates the addresses for accessing the values in memory (Stencil Address Generator SAG or first circuitry). Both units have their own program memory that runs independently of each other. The data between SAG and AU is connected via a "register file" (a certain number of small stores, each of which can hold a value of a certain size). The process summarizes as follows. The SAG loads data from memory into a register and the AU reads these registers and performs an arithmetic operation using the data. In order to obtain a latency tolerance for memory accesses, first-in-first-out queue memory may be used. These exist for the inbound and outbound directions and act as buffers. This allows certain different execution speeds of SAG and AU to be bridged for a while, so that they can then synchronize again. The goal here is to run the AU with maximum efficiency.

The AU is designed to be scalable so that any number of arithmetic computing units can be used. To address this within a single processor cycle, a Very Long Instruction Word (VLIW) architecture can be used that summarizes several instructions into one large one.

Each accelerator unit may have a large number of memory channels. In order to be able to operate all these channels at the same time, the SAG may also use a VLIW architecture. The wide Instruction word can contain any permutation of load and store operations.

The SAG calculates the addresses by accessing loop generators and certain fixed values (Offsets), which are set by the user and are application specific. A linear combination of these calculates the address. Each load and store instruction can pass offsets in 3 dimensions as well as the loop generators to be used. This makes it possible to enable different, simultaneous runs through e.g. volumes. This can be used, for example, in a matrix - matrix multiplication, because here it must be iterated over rows and columns.

In summary, the computing unit is based on a processor design that forms a pipeline of two decoupled functional VLIW units with different instruction sets and programs. Synchronization is done by the implicit properties of the FIFO registers and guarantees of the compiler. One functional unit has the property of efficiently calculating (in hardware) addresses of scratchpad memory, the other functional unit can perform arithmetic operations. All components can be scaled up as desired.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The research that led to these results was funded by the European Union.

## Claims

1. A computing unit (100), comprising:
first circuitry (110) configured to determine at least one memory address based on a first program code and to receive data stored at the memory address; and
second circuitry (120) configured to perform arithmetic operations based on a second program code using the received data.

2. The computing unit of claim 1, further comprising:
interface circuitry (130) configured to receive the data from the first circuitry (110) and to provide the data to the second circuitry (120).

3. The computing unit of claim 1 or 2, wherein the interface circuitry (130) comprises a multi-stage-buffer.

4. The computing unit of one of claims 1 to 3, wherein
the first circuitry (110) comprises a first program memory configured to hold the first program code; and
the second circuitry (120) comprises a second program memory configured to hold the second program code.

5. The computing unit of one of claims 1 to 4, wherein the first circuitry (110) comprises at least one loop counter.

6. The computing unit of claim 5, wherein the first circuitry (110) is configured to receive an offset value and to determine a memory address combining the offset value and an output of the loop counter.

7. The computing unit of claim 5 or 6, wherein the first circuitry (110) is configured to multiply an output of the loop counter with a stride.

8. The computing unit of one of claims 1 to 7, wherein the first circuitry (110) is configured to process very long instruction words.

9. The computing unit of one of claims 1 to 8, wherein the second circuitry (120) is configured to process very long instruction words.

10. A method to perform computations, comprising:
determine at least one memory address (410) based on a first program code;
receiving data (420) stored at the memory address; and
performing a calculation (430) based on a second program code using the received data.

11. The method of claim 10, further comprising:
storing the received data in an interim memory triggered by the first program code; and
reading the received data from the interim memory triggered by the second program code.

12. The method of claim 11, wherein the interim memory comprises a multi-stage-buffer.

13. Method to generate program code for a hardware comprising a multi-stage-buffer having a queue of n elements, comprising:
defining n separate registers (510) for every element of the multi-stage-buffer;
optimizing the program code (520) to generate optimized program code; and
replacing instructions (530) to access the n separate registers with an instruction to access the multi-stage-buffer within the optimized program code.

14. The method of claim 13, further comprising:
generating a first program code for first circuitry accessing the multi-stage-buffer, the first circuitry being configured to determine at least one memory; and
generating a second program code for second circuitry accessing the multi-stage-buffer, the second circuitry being configured to perform arithmetic operations.

15. A computer Program having a program code for performing a method according to one of claims 10 to 14 when the program code is executed by a processor.

## Amended claims

### Amended claims in accordance with Rule 137(2) EPC.

1. A computing unit (100), comprising:
first circuitry (110) configured to determine at least one memory address based on a first program code and to receive data stored at the memory address, the first circuitry (110) comprising a first program memory configured to hold the first program code; and
second circuitry (120) configured to perform arithmetic operations based on a second program code using the received data; the second circuitry (120) comprising a second program memory configured to hold the second program code; and
interface circuitry (130) configured to receive the data from the first circuitry (110) and to provide the data to the second circuitry (120).

2. The computing unit of claim 1, wherein the interface circuitry (130) comprises a multi-stage-buffer.

3. The computing unit of one of claims 1 or 2, wherein the first circuitry (110) comprises at least one loop counter.

4. The computing unit of claim 3, wherein the first circuitry (110) is configured to receive an offset value and to determine a memory address combining the offset value and an output of the loop counter.

5. The computing unit of claim 3 or 4, wherein the first circuitry (110) is configured to multiply an output of the loop counter with a stride.

6. The computing unit of one of claims 1 to 5, wherein the first circuitry (110) is configured to process very long instruction words.

7. The computing unit of one of claims 1 to 6, wherein the second circuitry (120) is configured to process very long instruction words.

8. A method to perform computations, comprising:
determine at least one memory address (410) based on a first program code stored in a first memory;
receiving data (420) stored at the memory address;
storing the received data in an interim memory triggered by the first program code;
reading the received data from the interim memory triggered by the second program code performing a calculation (430) based on a second program code stored in a second memory using the received data.

9. The method of claim 8, wherein the interim memory comprises a multi-stage-buffer.

10. Method to generate program code for a hardware comprising a multi-stage-buffer having a queue of n elements, comprising:
defining n separate registers (510) for every element of the multi-stage-buffer;
optimizing the program code (520) to generate optimized program code; and
replacing instructions (530) to access the n separate registers with an instruction to access the multi-stage-buffer within the optimized program code.

11. The method of claim 10, further comprising:
generating a first program code for first circuitry accessing the multi-stage-buffer, the first circuitry being configured to determine at least one memory; and
generating a second program code for second circuitry accessing the multi-stage-buffer, the second circuitry being configured to perform arithmetic operations.

12. A computer Program having a program code for performing a method according to one of claims 8 to 11when the program code is executed by a processor.
